# EUROPEAN PATENT SPECIFICATION

(11) **EP 2 192 245 B1**
(45) Date of publication and mention of the grant of the patent: **30.05.2012**
(21) Application number: 09175409.3
(22) Date of filing: 09.11.2009
(51) Int. Cl.: E04B 1/58, F03D 11/04, F16L 23/036

(54) **Tower for a wind turbine and a method for assembling the tower**
Turm für eine Windturbine und Verfahren zu dessen Herstellung
Tour d'une turbine aeolienne et procédée de assemblage du tour

(30) Priority: 27.11.2008 DK 200801671; 01.12.2008 US 118680 P
(43) Date of publication of application: 02.06.2010
(73) Proprietor: Vestas Wind Systems A/S, 8200 Aarhus N (DK)
(72) Inventor: Kristensen, Jonas, 6900 Skjern (DK)
(74) Representative: Larsson, Malin

(56) References cited:
- DE-A1-102005 052 419
- DE-C1- 10 223 429
- JP-A- 2008 308 945
- US-A- 3 843 764
- US-A1- 2005 072 067

## Description

### Technical field

The present invention generally relates to a wind power plant and a method for assembling a wind power plant.

### Background of the invention

Towers for wind power plants may be constructed from e.g. steel lattice frameworks, concrete, steel tubes or composite materials. Currently, the towers are predominantly made of a number of tubular steel sections mounted on top of each other and interconnected by using bolted flange joints. The method of connecting objects by means of bolted flange joints has long been known in the art and the method is universally employed.

The flanges are usually provided with a plurality of through-holes uniformly distributed along the flanges. This arrangement allows for a large number of bolts and corresponding nuts to be used.

One way to assemble sections of a wind turbine tower by using bolts and nuts is disclosed in US patent application US2006000185.

However, ever larger and heavier towers are being continuously developed as this is a fairly simple way to increase power output of the wind power plant by taking advantage of the higher wind speed, and thus higher energy content, at higher altitude. As a consequence, the wind loads on the tower have increased significantly and the strength requirements of the wind tower components in general and their flange joints in particular will also increase. Consequently, the required number of bolts and corresponding nuts has also increased significantly. However, this is in conflict with the constant goal of reducing the weight of the tower, the material consumption, the work required to install the wind power plant and thus the total cost. A wind power plant according to the preamble of claim 1 is known from DE 102 23 429 C1.

### Summary of the invention

In view of the above, an objective of the present invention is to render possible the use of an increased number of nuts and bolts in order to interconnect a flange of a tower section with a flange of an adjacent element.

Another objective is to decrease the size of the flanges of both the tower sections as well as the adjacent element, thereby achieving material savings.

Yet another objective is to increase the structural strength of the tower as a whole.

A further objective of the present invention is to provide a method for assembling a tower, said tower being part of the wind power plant.

In view of at least these objects, the invention relates to a wind power plant comprising a tower, said tower comprising at least one tower section provided with at least one flange and forming at least part of the wall of the tower, said power plant further comprising an element provided with at least one flange and adapted to be installed adjacent said tower section, wherein said tower section and said element have abutting flanges, said flanges being releasably interconnected by sets of bolts and nuts, wherein at least one surface associated with each set of bolt and nut and facing away from said flanges is provided with a plurality of recesses for receiving projections of a tightening device.

By providing a surface of each bolt or nut facing away from the flanges with a plurality of recesses and consequently enabling it to receive projections of the tightening device, a torque may be applied by means of the tightening device without engaging the external lateral surfaces of the bolt or the nut. Instead, the interface surface for transmitting the torque to the bolt or the nut is the surface provided with a plurality of recesses. As a consequence, less space is required in order to tighten individual sets of bolts and nuts.

This means that sets of bolts and nuts may be positioned closer to the tower wall since less space around the nut is required for tightening the bolt. Accordingly, the flange width can be reduced, thereby reducing the material consumption, productions costs and also the weight of the tower.

Furthermore, the individual sets of bolts and nuts may be positioned closer to each other, ensuring that an increased number of bolts and nuts may be installed along the circumference of the flanges. The increased number in combination with the closer positioning of the bolts and nuts relative the tower wall may increase structural stability of the tower.

The element adapted to be installed adjacent the tower section can be another tower section, a tower foundation, a nacelle or some other component of the wind power plant. Accordingly, the sets of bolts and nuts can be arranged in any interconnection between the main structural parts of a wind power plant, which structural parts are interconnected by flange joints.

Said nuts can be provided with said recesses, whereby the bolts as such can be standardized and readily available bolts.

Said bolts can each have a bolt head provided with said recesses. Such bolt can either be used with a standardized, readily available nut or together with a nut provided with recesses.

At least one of said sets of bolts and nuts can comprise a stud bolt and two nuts, said two nuts each provided with said recesses. A stud bolt is known as a shaft being threaded along its full length or along a portion of its two ends. Said stud bolt can be a standardized and readily available stud bolt.

Each bolt can further comprise an at least partially threaded shaft, said bolt being arranged such that its shaft is parallel to the longitudinal axis of the tower, and wherein the distance between a wall of the tower facing said flange and an outer periphery of the shaft is less than 70 mm, more preferred less than 60 mm and most preferred less than 50 mm.

It is to be understood that the distance to the tower wall depends on the size of the nut and the bolt head. Since the torque required to tension the bolt and nut can be applied by a tightening device without engaging the lateral sides of the bolt head or the nut, the bolt head or the nut can be arranged directly adjacent the tower wall. Accordingly the flange width can be reduced while maintaining the structural stability of the tower.

Each bolt can be arranged such that a head thereof is orientated downwards. The technician installing the wind tower may thus perform his tasks in an optimal working position. This also facilitates the connecting of the bolt with the corresponding nut, since threading of the nut on the shaft of the bolt may be visually controlled

Said recesses can be provided with such depth that projections of a tightening device are fully insertable into said recesses. In this way, the contact of the bolt or nut surface provided with recesses and the surface of the tightening device from which the projections extend is ensured. The friction between these two surfaces may provide additional grip while the bolt and nut are being tightened.

Said recesses can be provided with such width that the inner lateral surfaces of the recesses abut outer lateral surfaces of projections of a tightening device when said projections are inserted into said recesses. In this way, a close fit of the tightening device and the bolt or nut is achieved while the bolt and nut are being tightened. This may contribute to an improved torque transfer from the tightening device to the bolt or nut.

The recesses can be cylindrical blind bores arranged parallel to each other. In this way, a simplified manufacturing process of the bolts or nuts, using relatively simple tools may be achieved. This may reduce the overall production costs. It is to be understood that recesses with the same function can be arranged as through-holes.

According to another aspect, the invention relates to a method for joining a tower section to an adjacent element of a wind power plant comprising: arranging the tower section and the element such that a flange of the tower section is brought into contact with a flange of the element, aligning holes arranged in the flange of the tower section with holes arranged in the flange of the element, interconnecting the flanges by sets of bolts and nuts, the bolts extending through at least some of the aligned holes, and tightening each set of bolt and nut with a tightening device having projections adapted to engage recesses provided in at least one surface associated with said set and facing away from the flanges.

The method allows, as has been discussed above in view of the wind power plant, sets of bolts and nuts to be positioned closer to the tower wall. This may make it possible to reduce the width of the flange, thereby reducing the material consumption and the total weight of the tower.

Furthermore, the inventive method may make it possible to install an increased number of sets of bolts and nuts along the circumference of the flange, thereby increasing the structural stability of the tower.

The method can further comprise the step of arranging each bolt such that a head thereof is oriented downwards. The technician installing the tower may thus perform his tasks (e.g. tightening the sets of bolts and nuts) in an optimal working position. This also facilitates the connecting of the bolt with the corresponding nut, since threading of the nut on the shaft of the bolt may be visually controlled.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements.
Figure 1 is a schematic view of a wind power plant.
Figure 2 is a cross-sectional view of a flange joint between two adjacent sections of the tower without any bolts and nuts.
Figure 3 is a cross-sectional view of a flange joint between two adjacent sections of the tower with a plurality of sets of bolts and nuts.
Figure 4 shows a first embodiment of a set of a bolt and a nut.
Figure 5 shows a second embodiment of a set of a bolt and nut.
Figure 6 shows one embodiment of a tightening device.

### Detailed description of preferred embodiments

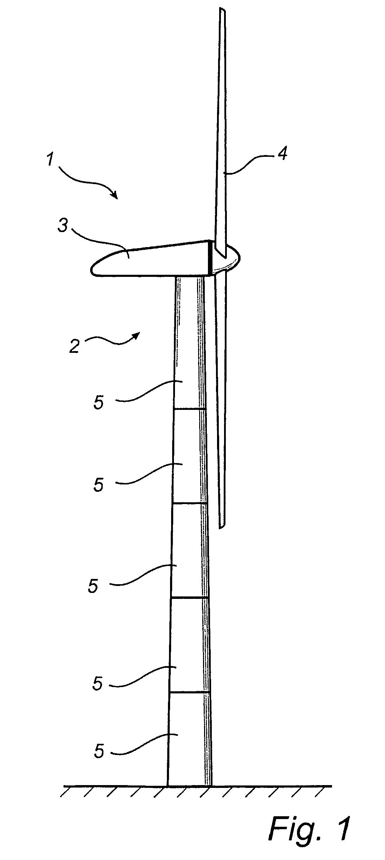

Figure 1 is a schematic view of a wind power plant 1 with a nacelle 3 supported by a tower 2. The purpose of the tower 2 is to support the weight of a nacelle 3 that is arranged on top of the tower 2. Further, it serves to position rotor blades 4 to a suitable operational height.

Modern towers comprise a plurality of tubular tower sections 5, which may be manufactured in 20-30 meter long segments and subsequently mounted on top of each other to provide the tower with a sufficient height. Typically, the tower sections are made of steel. The shape of the individual tower sections are normally either straight cylindrical or frusto-conical.

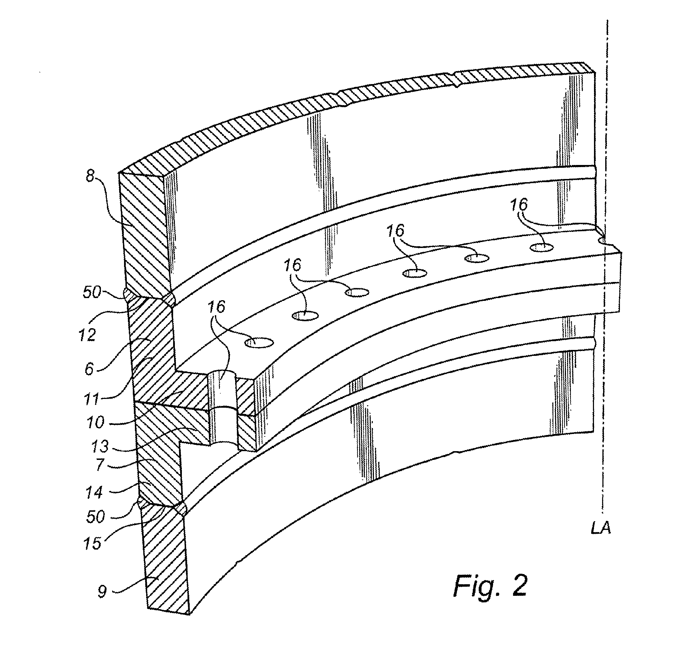

Figure 2 is a vertical cross-sectional view of a portion of an upper 8 and a lower 9 tower section with corresponding flanges 6, 7.

Each tower section 8, 9 normally comprises a flange positioned at each end of the tower section. A first flange 6 is attached to the upper tower section 8 and a second flange 7 is attached to the lower tower section 9. In the disclosed embodiment each flange 6, 7 runs along the entire circumference of the associated tower section 8, 9. It is to be understood that the flanges may also be divided into a number of flange sections which together form a circumferential continuous or non-continuous flange.

For practical reasons, each flange 6, 7is normally mounted as a separate part to the individual tower section by using a suitable joining technique, for example welding.

The first flange 6 has a substantially L-shaped cross-section with a first leg 10 extending horizontally towards the interior of the tower, thus forming a substantially perpendicular angle with the longitudinal axis LA of the tower sections 8 and 9, and a second leg 11 attached to the upper tower section 8 by means of a welding seam 50 at the lower edge 12 of said upper tower section 8.

Analogously, the second flange 7 also has a substantially L-shaped cross-section with a first leg 13 extending horizontally towards the interior of the tower, thus forming a substantially perpendicular angle with the longitudinal axis LA of the tower sections 8, 9, and a second leg 14 attached to the lower tower section 9 by means of a welding seam 50 at the upper edge 15 of said lower tower section 9.

The inwards extending horizontal first legs 10, 13 of the first and second flanges 6, 7 are in direct contact with each other.

Each flange 6, 7 is provided along its circumferential extension with a number of through-holes 16. The through-holes 16 may be circumferentially equally spaced from one another or arranged in groups. The through-holes 16 of the first flange 6 are aligned with the through-holes of the second flange 7.

The flanges 6, 7 are used as flat support surfaces when the two adjacent, upper 8 and lower 9, tower sections are to be interconnected.

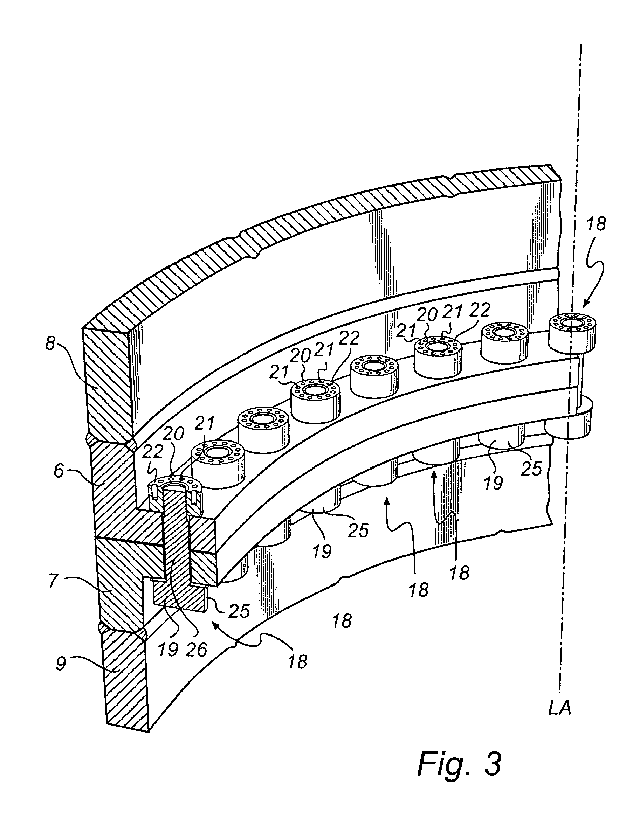

Now turning to Figure 3 a portion of the upper and lower tower sections 8, 9with the corresponding flanges 6, 7 are shown in an interconnected state.

As it may be seen, the flanges 6, 7 are interconnected by means of a plurality of sets 18 of bolts 19 and nuts 20 engaging said through-holes 16.The bolts can be provided with washers (not shown).

Typically, each bolt 19 is arranged such that a bolt head 25 thereof, when installed, is orientated downwards. However, upwards orientated bolt heads 25 are also conceivable. Typically, standardized and readily available bolts are used. The bolt 19 can be threaded along the full length of its shaft 26 or, as shown, be threaded only along its free end.

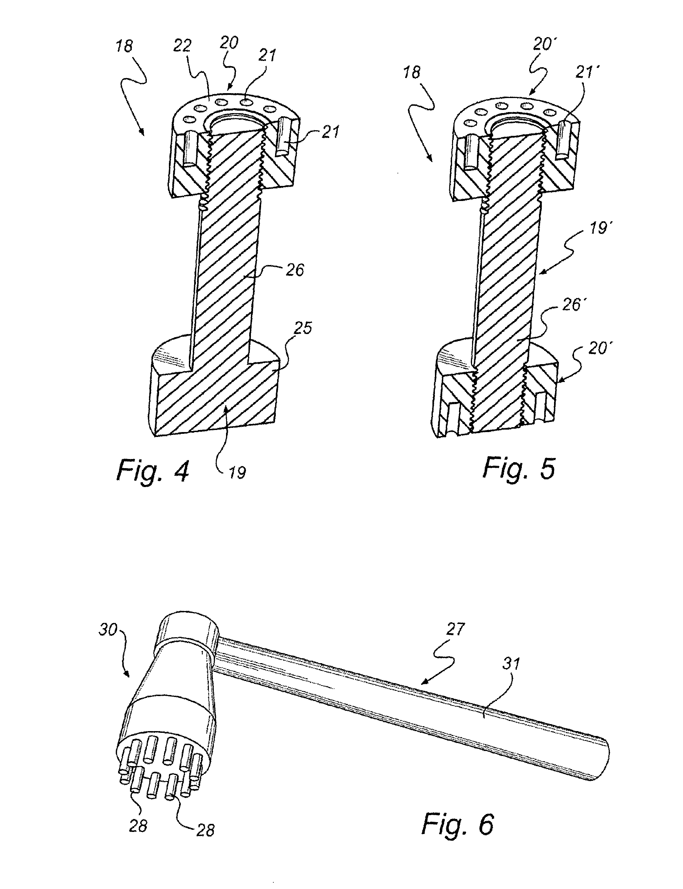

As can be seen in Figures 3 and 4, each nut 20 has an internal thread which engages the threaded section of the bolt shaft 26. The nut 20 according to the shown embodiment has circular cross-section, although it is to be understood that other cross-sectional shapes are equally possible. This also applies to the bolt head 25.

The surface 22 of the nut 20 facing away from the bolt head 25 and flange is provided with a plurality of recesses 21 extending in the longitudinal direction of the shaft 26. In the disclosed embodiment the recesses 21 are shaped as cylindrical blind bores and arranged parallel to one another and circumferentially uniformly distributed. Still it is to be understood that any pattern and geometry can be used. Also, it is to be understood that the recesses can be arranged as through-holes. Typically, there are 6-12 recesses 21 per nut 20, depending on the size of the nut.

Although not shown, it is to be understood that generally the bolt head 25 as such can be provided with recesses corresponding to the recesses of the nut.

Now turning to Figure 5, as an alternative to a threaded bolt and a nut provided with said recesses, the bolt can be a so called stud bolt 19', i.e a shaft 26' provided with threads, either along its full length or along its two free ends. Such stud bolt 19' is used together with two nuts 20', each having the above disclosed recesses 21.

Figure 6 shows one embodiment of a tightening device 27. The tightening device 27 typically comprises an engagement head 30 having a plurality of circumferentially distributed projections 28. The distribution pattern as well as the size and geometry of the projections 28 correspond to those of the recesses 21 of the nut 20. A dedicated tightening device 27 may be made available for each nut size.

The tightening device 27 may, as shown in Figure 6, include a handle handle 31 adapted to operate in conjunction with the engagement head 30. The handle 31 can be a fixed handle, an interchangeable handle or even a ratchet wrench.

Referring back to Figures 2 and 3, when joining the two tower sections 8, 9 by said flange joint, the two tower sections are arranged on top of each other with the two opposing flanges 6, 7 lying flat against each other so that their corresponding through-holes 16 are aligned. A bolt 19 is arranged in each through-hole 16 thus formed and a nut 20 is threaded onto the free end of the bolt 19. Then the engagement head 30 of the tightening device 27 is arranged to the nut 20 with the projections 28 inserted to the recesses 21. Finally, the bolt 19 is tensioned by applying a sufficient torque to the nut 20. This procedure is repeated throughout the flange joint.

By allowing play between the bottom surface of the recess 21 and the front surface of the projection 28, i.e the depth of the recesses is exceeding the length of the projections, the projections 28 of the tightening device 27 are fully insertable into said recesses 21. This means that the contact between the nut surface 22 provided with recesses 21 and the surface of the tightening device 27 from which the projections 28 extend is ensured. Consequently, the friction between the inner lateral surfaces of the recesses and the outer lateral surfaces of the projections provide additional grip while the nut 20 is being tightened.

By providing recesses 21 with such width that their inner lateral surfaces abut the outer lateral surfaces of the projections 28, a close fit of the tightening device 27 and the nut 20 is achieved while the nut 20 is being tightened. This may contribute to an improved torque transfer from the tightening device 27 to the nut 20.

By the design of the recesses 21 and the projections 28, the tightening device 27 can engage the nut 20 and tighten it on the bolt 19 without engaging the lateral surfaces of the nut 20. As a consequence, less space is required in order to tighten individual nuts 20.

By the tightening device 27 engaging the nut 20 in the longitudinal direction of the bolt 19 without any circumferential outer engagement, a larger number of sets 18 of bolts 19 and nuts 20 can be used allowing a higher structural strength of the tower. Also, the width of the flanges can be reduced since the sets 18 of bolts 19 and nuts 20 can be arranged closer to the longitudinal wall of the tower section, allowing a reduced weight and material consumption and thus a cheaper tower design.

The above disclosed design of the flange joint is known as a L-flange joint. Although the flanges are disclosed as being directed towards the interior of the tower, they can within the scope of the invention be directed outwards from the interior of the tower. Also, the inventive concept is equally applicable to a T-flange joint (not shown) wherein each flange has a T-shaped cross-section with a first leg extending horizontally into the interior of the tower and a second leg extending horizontally to the exterior of the tower, wherein both legs are provided with through-holes to receive sets of bolts and nuts.

The above disclosed flange joint has been described with regard to two adjacent, upper and lower, tower sections that are to be interconnected. However, the disclosed flange joint is also conceivable with regard to other elements of the wind power plant, such as between a tower section and a part of a tower foundation or between the nacelle and an upper most tower section. In case the sets of bolts and nuts are used between the nacelle and the uppermost tower section, said bolts are preferably arranged to extend through a yaw system, which yaw system allows the nacelle to turn in view of the tower. The flange joint is also applicable while connecting other elements such as transition pieces to the tower sections.

The invention has mainly been described above with reference to embodiments, as defined by the appended patent claims.

## Claims

1. A wind power plant comprising a tower (2), said tower comprising at least one tower section (8) provided with at least one flange (6) and forming at least part of the wall of the tower,
said power plant further comprising an element (9) provided with at least one flange (7) and adapted to be installed adjacent said tower section, wherein said tower section (8) and said element (9) have abutting flanges (6, 7), said flanges being releasably interconnected by sets (18) of bolts (19) and nuts (20), **characterized in that**
at least one surface associated with each set of bolt and nut and facing away from said flanges is provided with a plurality of recesses (21) for receiving projections (28) of a tightening device (27).

2. A wind power plant according to claim 1, wherein said element (9) is a tower section.

3. A wind power plant according to claim 1, wherein said element (9) is a tower foundation.

4. A wind power plant according to claim 1, wherein said element (9) is a nacelle of the wind power plant.

5. A wind power plant according to any of the preceding claims, wherein said nuts (20) are provided with said recesses (21).

6. A wind power plant according to claims 1-4, wherein said bolts (19) each have a bolt head provided with said recesses (21).

7. A wind power plant according to claims 1-4, wherein at least one of said sets (18) of bolts and nuts comprises a stud bolt (19') and two nuts (20'), said two nuts each provided with said recesses (21).

8. A wind power plant according to any of the preceding claims, wherein each bolt (19) further comprises an at least partially threaded shaft (26), said bolt being arranged such that its shaft is parallel to the longitudinal axis of the tower, and wherein the distance between a wall of the tower facing said flange (6, 7) and an outer periphery of the shaft is less than 70 mm, more preferred less than 60 mm and most preferred less than 50 mm.

9. A wind power plant according to any of the preceding claims, wherein each bolt (19) is arranged such that a head thereof is orientated downwards.

10. A wind power plant according to any of the preceding claims, wherein said recesses (21) are provided with such depth that projections (28) of a tightening device (27) are fully insertable into said recesses (21).

11. A wind power plant according to any of the preceding claims, wherein the recesses (21) are provided with such width that the inner lateral surfaces of the recesses abut outer lateral surfaces of projections (28) of a tightening device (27) when said projections are inserted into said recesses.

12. A wind power plant according to any of the preceding claims, wherein the recesses (21) are cylindrical blind bores arranged parallel to each other.

13. A method for joining a tower section (8) to an adjacent element (9) of a wind power plant comprising:
arranging the tower section (8) and the element (9) such that a flange (6) of the tower section is brought into contact with a flange (7) of the element,
aligning holes (16) arranged in the flange of the tower section with holes (16) arranged in the flange of the element,
interconnecting the flanges by sets (18) of bolts (19) and nuts (20), the bolts being arranged and extending through at least some of the aligned holes, and
tightening each set of bolt and nut with a tightening device (27) having projections (28) adapted to engage recesses provided in at least one surface associated with said set and facing away from the flanges.

14. A method according to claim 13, further comprising the step of arranging each bolt such that a head thereof is oriented downwards.

## Patentansprüche

1. Windkraftwerk, das einen Turm (2) umfasst, wobei der Turm mindestens einen Turmabschnitt (8) umfasst, der mit mindestens einem Flansch (6) versehen ist und mindestens einen Teil der Wand des Turms bildet,
wobei das Kraftwerk ferner ein Element (9) umfasst, das mit mindestens einem Flansch (7) versehen und zum Installierten angrenzend an den Turmabschnitt ausgelegt ist, wobei der Turmabschnitt (8) und das Element (9) angrenzende Flansche (6, 7) haben, wobei die Flansche lösbar durch Sätze (18) von Bolzen (19) und Muttern (20) miteinander verbunden sind,
**dadurch gekennzeichnet, dass** mindestens eine Fläche, die mit jedem Satz aus Bolzen und Mutter verbunden ist und von den Flanschen weg weist, mit mehreren Vertiefungen (21) zum Aufnehmen von Vorsprüngen (28) einer Anzugsvorrichtung (27) versehen ist.

2. Windkraftwerk nach Anspruch 1, wobei das Element (9) ein Turmabschnitt ist.

3. Windkraftwerk nach Anspruch 1, wobei das Element (9) ein Turmfundament ist.

4. Windkraftwerk nach Anspruch 1, wobei das Element (9) eine Gondel des Windkraftwerkes ist.

5. Windkraftwerk nach einem der vorherigen Ansprüche, wobei die Muttern (20) mit den Vertiefungen (21) versehen sind.

6. Windkraftwerk nach einem der Ansprüche 1-4, wobei die Bolzen (19) jeweils einen Bolzenkopf haben, der mit den Vertiefungen (21) versehen ist.

7. Windkraftwerk nach einem der Ansprüche 1-4, wobei mindestens einer der Sätze (18) von Bolzen und Muttern einen Stehbolzen (19') und zwei Muttern (20') umfasst, wobei die zwei Muttern jeweils mit den Vertiefungen (21) versehen sind.

8. Windkraftwerk nach einem der vorherigen Ansprüche, wobei jeder Bolzen (19) ferner einen zumindest teilweise mit Gewinde versehenen Schaft (26) umfasst, wobei der Bolzen so angeordnet ist, dass sein Schaft parallel zur Längsachse des Turms liegt, und wobei der Abstand zwischen einer Wand des Turms, die zum Flansch (6, 7) hin weist und einer äußeren Peripherie des Schaftes kleiner als 70 mm, besser kleiner als 60 mm und am besten kleiner als 50 mm ist.

9. Windkraftwerk nach einem der vorherigen Ansprüche, wobei jeder Bolzen (19) so angeordnet ist, dass ein Kopf desselben nach unten ausgerichtet ist.

10. Windkraftwerk nach einem der vorherigen Ansprüche, wobei die Vertiefungen (21) mit einer solchen Tiefe versehen sind, dass Vorsprünge (28) einer Anzugvorrichtung (27) vollständig in die Vertiefungen (21) eingeführt werden können.

11. Windkraftwerk nach einem der vorherigen Ansprüche, wobei die Vertiefungen (21) mit einem solchen lichten Maß versehen sind, dass die inneren Seitenflächen der Vertiefungen an die äußeren Seitenflächen der Vorsprünge (28) einer Anzugvorrichtung (27) angrenzen, wenn die Vorsprünge in die Vertiefungen eingeführt sind.

12. Windkraftwerk nach einem der vorherigen Ansprüche, wobei die Vertiefungen (21) zylindrische Blindbohrungen sind, die parallel zueinander angeordnet sind.

13. Verfahren zum Verbinden eines Turmabschnittes (8) mit einem benachbarten Element (9) eines Windkraftwerks, umfassend:
Anordnen des Turmabschnittes (8) und des Elementes (9) derart, dass ein Flansch (6) des Turmabschnittes in Kontakt mit einem Flansch (7) des Elementes gebracht ist,
Ausrichten von Löchern (16), die im Flansch des Turmabschnittes angeordnet sind, zu Löchern (16), die im Flansch des Elementes angeordnet sind,
Verbinden der Flansche durch Sätze (18) von Bolzen (19) und Muttern (20), wobei die Bolzen angeordnet sind und sich durch mindestens einige der ausgerichteten Löcher erstrecken, und
Anziehen jedes Satzes aus Bolzen und Mutter mit einer Anzugvorrichtung (27), die Vorsprünge (28) hat, welche zum Eingriff in Vertiefungen ausgelegt sind, die in mindestens einer Fläche vorhanden sind, welche mit dem Satz verbunden ist und von den Flanschen weg weist.

14. Verfahren nach Anspruch 13, das ferner den Schritt des Anordnens jedes Bolzens derart umfasst, dass ein Kopf desselben nach unten ausgerichtet ist.

## Revendications

1. Eolienne comprenant une tour (2), ladite tour comprenant au moins une section de tour (8) pourvue d'au moins une bride (6) et formant au moins une partie de la paroi de la tour,
ladite éolienne comprenant en outre un élément (9) pourvu d'au moins une bride (7) et apte à être installé adjacent à ladite section de tour, dans laquelle ladite section de tour (8) et ledit élément (9) ont des brides en butée (6, 7), lesdites brides étant interconnectées de manière libérable par des ensembles (18) de boulons (19) et d'écrous (20),
**caractérisée en ce qu'**au moins une surface associée à chaque ensemble de boulon et d'écrou et opposée aux dites brides est pourvue d'une pluralité d'évidements (21) pour recevoir des saillies (28) d'un dispositif de serrage (27).

2. Eolienne selon la revendication 1, dans laquelle ledit élément (9) est une section de tour.

3. Eolienne selon la revendication 1, dans laquelle ledit élément (9) est une fondation de tour.

4. Eolienne selon la revendication 1, dans laquelle ledit élément (9) est une nacelle de l'éolienne.

5. Eolienne selon l'une quelconque des revendications précédentes, dans laquelle lesdits écrous (20) sont pourvus desdits évidements (21).

6. Eolienne selon l'une quelconque des revendications 1 à 4, dans laquelle lesdits boulons (19) comportent chacun une tête de boulon pourvue desdits évidements (21).

7. Eolienne selon l'une quelconque des revendications 1 à 4, dans laquelle au moins l'un desdits ensembles (18) de boulons et d'écrous comprend un boulon formant cheville (19') et deux écrous (20'), lesdits deux écrous étant chacun pourvus desdits évidements (21).

8. Eolienne selon l'une quelconque des revendications précédentes, dans laquelle chaque boulon (19) comprend en outre un arbre au moins partiellement fileté (26), ledit boulon étant agencé de sorte que son arbre soit parallèle à l'axe longitudinal de la tour, et dans laquelle la distance entre une paroi de la tour face à ladite bride (6, 7) et une périphérie extérieure de l'arbre est inférieure à 70 mm, avec plus de préférence inférieure à 60 mm et avec le plus de préférence inférieure à 50 mm.

9. Eolienne selon l'une quelconque des revendications précédentes, dans laquelle chaque boulon (19) est agencé de telle sorte qu'une tête de celui-ci soit orientée vers le bas.

10. Eolienne selon l'une quelconque des revendications précédentes, dans laquelle lesdits évidements (21) sont pourvus d'une profondeur telle que des saillies (28) d'un dispositif de serrage (27) puissent être complètement insérées dans lesdits évidements (21).

11. Eolienne selon l'une quelconque des revendications précédentes, dans laquelle les évidements (21) sont pourvus d'une largeur telle que les surfaces latérales intérieures des évidements viennent en butée contre les surfaces latérales extérieures des saillies (28) d'un dispositif de serrage (27) lorsque lesdites saillies sont insérées dans lesdits évidements.

12. Eolienne selon l'une quelconque des revendications précédentes, dans laquelle les évidements (21) sont des alésages aveugles cylindriques agencés en parallèle entre eux.

13. Procédé de jonction d'une section de tour (8) à un élément adjacent (9) d'une éolienne comprenant :
l'agencement de la section de tour (8) et de l'élément (9) de sorte qu'une bride (6) de la section de tour soit mise en contact avec une bride (7) de l'élément,
l'alignement des trous (16) agencés dans la bride de la section de tour avec les trous (16) agencés dans la bride de l'élément,
l'interconnexion des brides par des ensembles (18) de boulons (19) et d'écrous (20), les boulons étant agencés et s'étendant à travers au moins certains des trous alignés, et
le serrage de chaque ensemble de boulon et d'écrou avec un dispositif de serrage (27) ayant des saillies (28) aptes à se mettre en prise avec des évidements disposés dans au moins une surface associée au dit ensemble et à l'opposé des brides.

14. Procédé selon la revendication 13, comprenant en outre l'agencement de chaque boulon de sorte qu'une tête de celui-ci soit orientée vers le bas.
